# EUROPEAN PATENT APPLICATION

(11) **EP 1 068 807 A1**
(43) Date of publication of application: **17.01.2001**
(21) Application number: 99113385.1
(22) Date of filing: 10.07.1999
(51) Int. Cl.: A23L 2/39, A23L 1/185, A23G 1/00

(54) **A malted beverage powder and process**

(71) Applicant: Société des Produits Nestlé S.A., 1800 Vevey (CH)
(72) Inventor: Song-Bodenstab, Xiaomei, 1775 Mannens (CH); Eichler, Paul, 1373 Chavornay (CH)
(74) Representative: McConnell, Bruce Robert

(57) **Abstract**

A process for producing a malted beverage powder. Liquid beverage ingredients and a portion of dry malted beverage ingredients are wet mixed to provide a wet mixture having a moisture content of about 20% or less. The wet mixture is vacuum dried to provide a dry cake. The dry cake is comminuted to a base powder and the base powder is dry mixed with a further portion of dry malted beverage ingredients. The malted beverage powder obtained has a base powder of substantially homogeneous particles mixed with a dry mixture of dry malted beverage ingredients. The malted beverage powder has a substantially homogeneous colour.

## Description

### Field of the invention

This invention relates to a process for preparing a beverage powder; especially a malted beverage powder. The invention also relates to beverage powders produced by the process.

### Background of the invention

Malted beverage powders are well known; for example the beverage powders that are commercially available under the trade marks MILO and NESTOMALT. These beverage powders are reconstituted to a malted beverage drink by the addition of a hot or cold liquid; for example milk or water. Consequently the beverage powders are ideally readily soluble in hot or cold liquids.

The beverage powders are usually produced by mixing malt extracts or concentrates with various dry ingredients such as a protein source (for example milk powder, egg proteins, soya concentrates, etc), sugars, flavouring agents such as cocoa, vitamins, water and the like. Often, water must be added to reduce the viscosity of the mixture. Thereafter the mixture is dried, usually in a vacuum drying, and comminuted to powder. The main disadvantage of this conventional process is that considerable amounts of water need to be added during mixing and removed during the drying step; significantly increasing the cost of the beverage powders.

One attempt at providing a process with reduced energy consumption is described in PCT patent application WO 93/07769. In the process described in this PCT patent application, a cereal which contains less than 40% by weight moisture is cooked in an extruder under severe conditions. The severe conditions are described to be necessary to solubilise α-glucans in the cereal such that the ultimate product is sufficiently soluble in water. The extrudate leaving the extruder has a moisture content of about 5 to 8% by weight which may then be further dried to acceptable levels. Consequently a maximum of about 5% by moisture need be removed; a considerable saving over the conventional processes described above.

A problem with the process described in this PCT patent application is that it is very difficult to achieve the same flavour profile and texture as the beverage powders produced by the conventional processes. This is tacitly acknowledged in the PCT patent application where it is mentioned that the products have "new and interesting flavours". Unfortunately, many consumers notice immediately if the flavour or texture of the beverage powder is altered and usually react negatively. Therefore, while it is useful to be able to provide new flavours and textures, it is highly desirable if a new process is able to provide a product which at least closely mimics the flavour and texture of the product already on the market.

An object of the invention, therefore, is to provide a process for producing a malted beverage powder which requires less drying which is capable of producing a malted beverage powder having flavour and texture comparable to those produced by conventional drying processes.

### Summary of the invention

Accordingly, in one aspect, this invention provides a process for producing a malted beverage powder, the process comprising:-
wet mixing liquid beverage ingredients and a first portion of dry malted beverage ingredient to provide a wet mixture having a moisture content of about 20% or less;
vacuum drying the wet mixture to provide a dry cake;
comminuting the dry cake to a base powder; and
dry mixing the base powder with a second portion of dry malted beverage ingredients to provide the malted beverage powder.

Surprisingly, despite the process being different to conventional vacuum drying processes, the process is able to produce malted beverage powders which have a taste profile closely mimicking the taste of conventional beverage powders. Further, the process is able to produce beverage powders having similar appearance, texture and density to those of conventional beverage powders. Moreover, the process provides the substantial advantage that drying requirements per unit weight of the product is less; greatly reducing energy consumption.

Preferably, the second portion of the dry malted beverage ingredients comprises whole or skimmed milk powder and powdered cocoa solids.

In another aspect, this invention provides a malted beverage powder produced by the process defined above.

In a further aspect, this invention provides a malted beverage powder which comprises and mixture of:
a base powder of substantially homogeneous particles comprising malt, milk solids, cocoa and sugar; and
a supplementary powder in the form of a dry mixture comprising milk powder and cocoa powder;
the malted beverage powder having a substantially homogeneous brown colour.

### Detailed description of the preferred embodiments

Embodiments of the invention are now described, by way of example only. The invention is a process for producing a malted beverage powder. The invention is based upon the discovery that a portion of the dry ingredients of the malted beverage powder may be dry mixed with a base powder produced in the normal way. Despite the dry mixing at the end, the malted beverage powder has substantially the same appearance and organoleptic properties as powders produced in the conventional manner.

To produce the malted beverage powder, dry and liquid ingredients are required. The dry beverage ingredients may vary as desired according to local tastes and recipes. However, the dry beverage ingredients conveniently comprise one or more of a powdered protein source (for example milk powder, skim milk powder, egg protein powder, vegetable or grain protein isolates such as soya protein isolates), sugars or sweeteners (for example, sucrose, fructose, glucose, artificial sweeteners, etc), malt powders, hydrolysed cereal powders, starch powders, vitamins, minerals, cocoa powders, and powdered flavouring agents. The exact amount of each dry beverage ingredient may vary widely according to local recipes. Also, certain of the dry beverage ingredients may be omitted entirely.

The liquid beverage ingredients may also vary as desired according to local tastes and recipes. However the liquid beverage ingredients commonly comprise one or more of fats and oils (for example, vegetable fats such as palm oils and palm fats, and animal fats such as butter fats), liquid malt extracts, liquid sweeteners such as honey and glucose syrup, liquid protein sources such as vegetable protein concentrates, and the like. The exact amount of each liquid beverage ingredient may also vary widely according to local recipes and certain of the liquid beverage ingredients may be omitted entirely.

The dry and liquid ingredients may be conveniently obtained from local sources. The make up and specifications of these ingredients is not critical to the process. If a malted beverage powder is already produced by conventional processes, ideally as many as possible of the same ingredients as used in the conventional processes are used. This has the advantage of making it easier to achieve the same flavour profile; if this is desired.

The liquid beverage ingredients and a portion of the dry beverage ingredients are fed into a wet mixer in which the liquid and dry ingredients are thoroughly and homogeneously mixed. The wet mixer may be any suitable mixer for mixing ingredients having a low moisture content; for example below about 20% by weight. Suitable mixers include ribbon blenders, continuous mixers and extruders. The mixture of the liquid beverage ingredients and dry beverage ingredients has a solids content of at least about 80% by weight; for example about 85% to about 90% by weight. Although most of the dry ingredients contain small amounts of moisture, the primary source of moisture is liquid malt extract and water. For example, most commercial liquid malt extracts contain between 15 to 30% by weight water. The water is added to the wet mixer to reduce the viscosity of the mix to an acceptable level.

The mixture is then transferred to a suitable vacuum dryer which is able to handle extremely viscous mixtures. Vacuum band dryers are particularly preferred. The vacuum band dryers conventionally used are particularly suitable. The mixture is then dried to a cake in the vacuum dryer. The drying conditions in the vacuum dryer may be conventional; for example at about 120°C to about 160°C and at about 2 kPa to about 5 kPa. The cake about to leave the vacuum dryer may be cooled prior to leaving the dryer. Alternatively it may be cooled after leaving the dryer.

The cake is then comminuted using one or more crushers or mills as needed. The base powder obtained preferably contains less than about 4% by weight of moisture and preferably has a density of about 500 g/l to about 700 g/l.

A second portion of the dry beverage ingredients is then mixed with the base powder to provide the malted beverage powder. The second portion is preferably made up of a mixture of milk powder (skimmed or whole) and powdered cocoa solids. The base powder preferably comprises about 70% to about 90% by weight of the malted beverage powder.

The first portion of the dry beverage ingredients may make up about 30% to about 70% by weight of the dry weight of all ingredients. Preferably, the first portion of the dry beverage ingredients makes up about 35% to about 50% by weight of the dry weight of all ingredients. The second portion of the dry beverage ingredients may make up about 10% to about 30% by weight of the dry weight of all ingredients. Preferably, the second portion of the dry beverage ingredients makes up about 15% to about 25% by weight of the dry weight of all ingredients. Preferably the weight ratio of milk powder to cocoa powder in the second portion is about 1:0.6 to about 1:1.

The malted beverage powder preferably contains less than about 4% by weight of moisture; for example about 2% to about 3% by weight. Further, the malted beverage powder preferably has a density of about 500 g/l to about 700 g/l. For malted beverage powders which contain cocoa, the colour of the malted beverage powder appears to the eye as a substantially homogeneous brown despite the presence of the milk powder. The malted beverage powder preferably has a particle size less than about 2 mm although the size distribution may be wide. The malted beverage powder may then be filled in packages, cans, and the like.

It will be appreciated that numerous modifications may be made to the embodiment described above without departing from the scope of the invention as defined in the claims.

### Example 1

Malt extract, skimmed milk powder, cocoa, sugar, fats and minerals are mixed in a ribbon blender with water to provide a wet mixture. The first mixture has a solids content of about 87% by weight. The composition of the first mixture, on the basis of dry weight of the final product is as follows:-

| **Component** | **Percentage of final product based on dry weight** |
|---|---|
| Malt extract | 35% |
| Skimmed milk powder | 12% |
| Cocoa | 5% |
| Sugar | 19% |
| Fats | 8.6% |
| Minerals | 0.9% |
| | |
| Total | 80.5% |

The wet mixture is transferred to a vacuum belt dryer which is operated at 140°C at 35 mbar. The vacuum belt dryer includes a cooling stage operated at 30°C. The residence time in the vacuum belt dryer is about 25 minutes. The cake leaving the vacuum belt dryer has a moisture content of about 2% to about 2.2%.

The cake is crushed and milled to provide a base powder. The base powder has a density of about 500 g/l and a size of less than about 2 mm with a broad size distribution.

A dry mix of skimmed milk powder and cocoa is then mixed in with the base powder to provide the final powder. The dry mix provides 19.5% by weight of the final powder and is made up of 10% by weight of the milk powder, 7% by weight of the cocoa and 2.5% by weight of water, the percentages being on the basis of the dry weight of the final powder. The final powder has a substantially homogeneous brown colour and a density of about 520 g/l.

### Example 2

The beverage powder of example 1 is compared to the conventional powder. Both powders have substantially the same density. Further, the appearance, including the colour, appears substantially the same to the naked eye.

Both powders are placed in hot water at 80°C and have similar wetting and dissolution characteristics. Further, the organoleptic properties of the beverages obtained from the powders are largely indistinguishable from each other.

## Claims

1. A process for producing a malted beverage powder, the process comprising:-
wet mixing liquid beverage ingredients and a first portion of dry malted beverage ingredients to provide a wet mixture having a moisture content of about 20% or less;
vacuum drying the wet mixture to provide a dry cake;
comminuting the dry cake to a base powder; and
dry mixing the base powder with a second portion of dry malted beverage ingredients to provide the malted beverage powder.

2. A process according to claim 1 in which the first portion of the dry ingredients provides about 30% to about 70% of the dry weight of the malted beverage powder.

3. A process according to claim 2 in which the first portion of the dry ingredients provides about 35% to about 50% of the dry weight of the malted beverage powder.

4. A process according to any of claims 1 to 3 in which the second portion of the dry beverage ingredients provides about 10% to about 30% by weight of the dry weight of all ingredients.

5. A process according to any of claims 1 to 4 in which the wet mixture has a moisture content of about 10% to about 15% by weight.

6. A process according to any of claims 1 to 5 in which the second portion of the dry malted beverage ingredients comprises milk powder and powdered cocoa.

7. A malted beverage powder which comprises and mixture of:-
a base powder of substantially homogeneous particles comprising malt, milk solids, cocoa and sugar; and
a supplementary powder in the form of a dry mixture comprising milk powder and cocoa powder;
the malted beverage powder having a substantially homogeneous brown colour.

8. A malted beverage powder according to claim 7 in which the base powder comprises about 70% to about 90% by weight of the malted beverage powder.

9. A malted beverage powder according to claim 7 or claim 8 in which the weight ratio of milk powder to cocoa powder in the supplementary powder is about 1:0.6 to about 1:1.

10. A malted beverage powder according to any of claims 7 to 9 in which the base powder further comprises fats and minerals.
